# EUROPÄISCHE PATENTSCHRIFT

(11) **EP 1 120 378 B1**
(45) Veröffentlichungstag und Bekanntmachung des Hinweises auf die Patenterteilung: **02.08.2017**
(21) Anmeldenummer: 01100048.6
(22) Anmeldetag: 09.01.2001
(51) Int. Cl.: C01B 32/00, C01B 32/20, C04B 35/536

(54) **Verfahren zum Herstellen von expandiertem Graphit unter Verwendung von Phosphorsäuren**
Process for the preparation of an expanded graphite using phosphoric acids
Procédé de préparation d'un graphite expansé par utilisation d'acides phosphoriques

(30) Priorität: 29.01.2000 DE 10003927
(43) Veröffentlichungstag der Anmeldung: 01.08.2001
(73) Patentinhaber: SGL Carbon SE, 65201 Wiesbaden (DE)
(72) Erfinder: Öttinger, Oswin, Dr.-Ing., 86405 Meitingen (DE); Malik, Hubert, 86679 Ellgau (DE)

(56) Entgegenhaltungen:
- EP-A- 0 085 121
- WO-A-98/45223
- US-A- 4 895 713
- DATABASE CHEMABS [Online] CHEMICAL ABSTRACTS SERVICE, COLUMBUS, OHIO, US; MIYAMOTO, NORIMITSU ET AL: "Manufacture of thermal expansive graphite" retrieved from STN Database accession no. 132:155579 CA XP002169606 & JP 2000 044218 A (SUMIKIN CHEMICAL K. K., JAPAN) 15. Februar 2000 (2000-02-15)
- DATABASE CHEMABS [Online] CHEMICAL ABSTRACTS SERVICE, COLUMBUS, OHIO, US; SAKAMOTO, SHOJI ET AL: "Heat expansible graphite" retrieved from STN Database accession no. 130:40556 CA XP002169664 & JP 10 330108 A (NIPPON KASEI CHEMICAL CO., LTD., JAPAN) 15. Dezember 1998 (1998-12-15)

## Beschreibung

Die Erfindung betrifft ein Verfahren zum Herstellen von expandierten Graphit durch Umsetzen einer expandierbaren Graphiteinlagerungsverbindung aus kristallinen Graphitteilchen, die eine Schichtstruktur aufweisen, mit einer starken Protonensäure, einem Oxidationsmittel und einer Phosphorsäure. Die Erfindung betrifft ferner die Verwendung von expandiertem Graphit zur Herstellung von Graphitfolien, - laminaten und -dichtungen und sie betrifft eine Graphitdichtung mit einer extrem großen Dichtigkeit gegenüber Fluiden.

Graphiteinlagerungsverbindungen, in denen der Graphit Träger der positiven Ladungen ist und Anionen zwischen die Schichtebenen des Kristallgitters des Graphits eingelagert sind, haben wegen ihres Vermögens, unter Wärmezufuhr zu expandieren, während der letzten 25 Jahre ständig an technischer Bedeutung gewonnen. Besonders die Graphithydrogensulfate und Graphitnitrate sind wichtige Ausgangsprodukte für das Herstellen von expandiertem Graphit oder Graphitexpandat, das seinerseits durch Verdichten zu Formkörpern der verschiedensten Art, besonders aber zu Platten und Folien weiterverarbeitet wird. Aus Platten und Folien dieser Art aber auch aus Graphitexpandat direkt wird unter anderem eine Vielzahl von Produkten für die Dichtungstechnik wie Flachdichtungen, Stopfbuchspackungen oder Kalottendichtungen hergestellt. Neben dem Optimieren von Eigenschaften für Dichtungsmaterialien wie beispielsweise dem Rückfederungsverhalten, der chemischen Beständigkeit, den Gleiteigenschaften oder dem Verhindern von Korrosionen an den Dichtungsflächen wird wegen der ständig steigenden Anforderungen an die Dichtungsmaterialien aus Gründen des Umwelt- und Arbeitsschutzes danach getrachtet, die Permeabilität der Dichtungsmaterialien zu minimieren und deren Festigkeit zu erhöhen. Für Hochtemperaturanwendungen ist die Verbesserung der Oxidationsfestigkeit zusätzlich ein Ziel. Ein Schlüssel, diese Ziele zu verfolgen, liegt in der Art und Weise, das Ausgangsprodukt, nämlich die Graphiteinlagerungsverbindung herzustellen.

Nach bekannten Verfahren für das Herstellen von Dichtungsmaterialien wird gut kristalliner Flockengraphit mit einer Mischung aus konzentrierter Schwefel- und Salpetersäure, mit rauchender Salpetersäure (US 3 404 061) oder mit einer Mischung von Wasserstoffperoxid und konzentrierter Schwefelsäure (US 4 091 083) umgesetzt, die überschüssige Säure durch Waschen mit Wasser entfernt und das so erhaltene Graphitsalz nach einem Trocknungsschritt durch schnelles Erhitzen auf Temperaturen von mehr als 800°C expandiert. Das Expandat, das ein sehr geringes Schüttgewicht hat, wird dann weiter zu Dichtungsmaterialien oder anderen Produkten verarbeitet. Nach einem anderen Verfahren (US 4 895 713) wird möglichst wasserfrei mit einer so geringen Menge an Einlagerungsagens gearbeitet, daß die Reaktionsmischung keinen Überschuß an Flüssigkeit aufweist und die Graphiteinlagerungsverbindung nicht mehr gewaschen werden muß, sondern direkt expandiert werden kann. Zum Verbessern der Oxidationsbeständigkeit der aus dem Graphitexpandat erzeugten Produkte kann der Reaktionsmischung ein Phosphat oder Phosphorsäure zugesetzt werden. Nachteilig an den vorgenannten Verfahren ist, daß trotz des Verwendens von meist konzentrierten Säuren in der Einlagerungsmischung stets noch mehr oder weniger große Mengen Wassers vorhanden sind. Es ist bekannt, daß Graphiteinlagerungsverbindungen des Salztyps von Wasser hydrolysiert werden. Wenn also Wasser in der Reaktionsmischung vorhanden ist, kann nicht der größtmögliche Einlagerungseffekt erreicht werden. Das aus der so erhaltenen Graphiteinlagerungsverbindung hergestellte Graphitexpandat hat zwar teilweise eine gute aber noch keine optimale Struktur. Auch keine optimale Struktur haben Graphiteinlagerungsverbindungen, die gemäß US 3 333 941 hergestellt worden sind. Nach dem dort gelehrten Verfahren kann sowohl mit sehr geringen als auch mit sehr großen Mengen an Einlagerungsagenzien gearbeitet werden (Bereich:0,25 bis 4 g Einlagerungsagens zu 1 g Graphit). Ein wesentliches Kennzeichen dieses Verfahrens ist jedoch das Zusetzen von Phosphorpentoxid zur Einlagerungsmischung in Mengen von 2 bis 500 Gewichtsprozent bezogen auf die Menge eingesetzten Graphits. Nach Abschluß der Einlagerungsreaktion darf nicht mit Wasser gewaschen werden. Ein Zusetzen von Phosphorsäure zur Reaktionsmischung ist unwirksam. Allerdings war es nicht das Ziel der Erfindung, Graphiteinlagerungsverbindungen mit einem großen Expandiervermögen herzustellen. Die nach diesem Verfahren erhaltenen Produkte sollten als Mulch in der Landwirtschaft, als flammhemmende Zusätze oder als pH-Wert regelnde Mittel dienen. Sie wären also für das Herstellen von hochwertigen Dichtungsmaterialien nicht verwendbar. Der Expansionsfaktor dieser Graphiteinlagerungsverbindungen ist mit 1 zu maximal 200 dementsprechend vergleichsweise niedrig. Ein schwerwiegendes, praktisches Problem beim Arbeiten nach diesem Verfahren ist wie Versuche ergeben haben, das Hantieren des Phosphorpentoxids und das Arbeiten mit dieser Substanz. Vom Stauben des aggressiven Pulvers einmal abgesehen, läßt es sich, besonders wenn mit nur geringen Mengen an Einlagerungsflüssigkeit gearbeitet wird, gar nicht oder nur schwer homogen einmischen. Schon beim Vermischen von Phosphorpentoxid mit Naturgraphit erwärmt sich die Mischung und es tritt Klumpenbildung ein. Dies geschieht auch, wenn Phosphorpentoxid einer Reaktionsmischung aus flüssigem Einlagerungsagens und Naturgraphit untergemischt wird. Ein solcher verklebter Reaktionsbrei ist schwer hantierbar. Ein Wasserzusatz, der dieses Problem lösen könnte, ist kontraproduktiv, weil dadurch die Reaktionsmischung weiter und unkontrollierbar aufgeheizt und der eigentliche Zweck, möglichst wasserarm zu arbeiten, zunichte gemacht wird. Aus der japanischen Patentanmeldung JP 1033 0108 A ist ein Verfahren zur Herstellung von expandierbarem Graphit als Flammhemmungsmittel für Kunststoffe bekannt, bei dem die Graphitteilchen mit einer Reaktionsmischung aus Schwefelsäure, einem Oxidationsmittel und Phosphorsäure, bevorzugt einer hochkondensierten Polyphosphorsäure, oder Phosphorpentoxid behandelt werden. Die so erhaltene Graphiteinlagerungsverbindung wird anschließend gewaschen, beispielsweise mit Wasser, und getrocknet. Der besondere Vorteil des entsprechend diesem Verfahren hergestellten expandierbaren Graphits besteht darin, dass die thermische Expansion erst bei Temperaturen von mindestens 250 °C einsetzt. Dadurch ist dieser expandierbare Graphit als flammhemmendes Additiv für Kunststoffe mit hohen
Schmelzpunkten, die deshalb bei höheren Temperaturen verarbeitet werden müssen, geeignet. Durch thermische Expansion dieses expandierbaren Graphits bei 1000 °c wird ein Expandat mit einem spezifischen Volumen von 120 bis 220 cm¹/g erhalten. Dies entspricht einer Schüttdichte von 4,5 bis 8,3 g/l.

Die Aufgabe der dieser Patentanmeldung zugrundeliegenden Erfindung besteht darin, ein Verfahren zum Herstellen von expandiertem Grapht aus einer Graphiteinlagerungsverbindungen des salzartigen Typs zu schaffen, die ein sehr großes Expansionsvermögen haben. Des weiteren war es eine Aufgabe der Erfindung, einen expandierten Graphit bereitzustellen, der für die Herstellung von Produkten aus der Gruppe Graphitfolien, Graphitlaminate, Graphitdichtungen, Graphitpackungen, Graphitpackungsringe, 25 Graphitpackungsgarne geeignet ist. Es war ferner die der Erfindung zugrunde liegende Aufgabe, eine Graphitdichtung mit einer überragenden Dichtheit zu schaffen. Die erstgenannte Aufgabe wird entsprechend dem Anspruch 1 dadurch gelöst,
dass die Graphitteilchen im Temperaturbereich von -10°C bis + 80 °C ohne zusätzliche Zugabe von Wasser mit einer Reaktionsmischung umgesetzt werden, die mindestens auseiner starken, konzentrierten Säure aus der Gruppe bestehend aus Schwefelsäure mit einer Konzentration ab 90 Gew.-% Salpetersäure mit einer Konzentration ab 60 Gew.% oder Phosphorsäure mit einer Konzentration ab 80 Gew.%, einem Oxidationsmittel aus der Gruppe bestehend aus konzentrierter Salpetersäure mit einer Konzentration ab 60 Gew.-%, Wasserstoffperoxid oder Peroxoschwefelsäure zum oxidieren des Graphits und einer thermischen Polyphosphorsäure besteht, wobei diese Reaktionsmischung in einem Verhältnis von 33 - 200 Gewichtsteilen bezogen auf 100 Gewichtsteile Graphit eingesetzt und nach dem Beenden der Einlagerungsreaktion, so wie sie ist - ohne Zusatz von Wasser - durch schnelles Erhitzen auf mind. 800°C expandiert wird, dadurch gekennzeichnet, dass die Graphiteinlagerungsverbindung bis zu einem Schüttgewicht von 3 g/l oder kleiner expandiert wird.

Die nachgeordneten Ansprüche geben vorteilhafte Ausgestaltungen der erfinderischen Lösung wieder, und sie enthalten die Lösungen für die weiteren Aufgaben.

Für das Herstellen der Graphiteinlagerungsverbindungen können alle aus natürlichen Vorkommen oder auf synthetischem Wege gewonnenen Graphitqualitäten verwendet werden, die eine Schicht- oder Plättchenstruktur haben. Als starke Säure, deren Anion beim Einlagerungsprozeß zwischen
den Schichtebenen des Graphitgitters gebunden werden, können Schwefelsäure in Konzentrationen ab 90 Gew.-%, Salpetersäure in Konzentrationen ab 60 Gew.-%, oder Phosphorsaure in Konzentrationen ab 80 Gew.-% verwendet werden. Es können auch Mischungen der genannten Säuren angewandt werden. Vorzugsweise wird konzentrierte Schwefelsäure und besonders bevorzugt rote, rauchende Salpetersäure verwendet. Als Oxidationsmittel können alle aus dem Stand der Technik bekannten Mittel verwendet werden. Bevorzugt werden konzentrierte Salpetersäure, Wasserstoffperoxid oder
Peroxoschwefelsäure, eingesetzt. Diese Säuren werden bevorzugt in Mischung mit konzentrierter Schwefelsäure als Einlagerungsmittel verwendet. Besonders bevorzugt wird rote,rauchende Salpetersäure verwendet. Ein Vorteil dieser Verfahrensweise liegt darin, daß die rote, rauchende Salpetersäure einerseits als Oxidationsmittel und andererseits als Einlagerungsagens, dessen Anion bevorzugt
zwischen die Schichtebenen des Graphits eingelagert wird, wirkt.

Als erfindungswesentlichen Teil enthält die Reaktionsmischung eine thermische Polyphosphorsäure. Vorzugsweise werden thermische Polyphosphorsäuren mit einem rechnerischen Gehalt an Phosphorpentoxid von größer oder gleich 76 Gew.-% oder von größer oder gleich 84 Gew.-% verwendet. Welche Säurekonzentration angewendet wird, hängt von den jeweiligen Bedingungen ab. Thermische Polyphosphorsäuren werden durch Absorbieren von Phosphorpentoxid in verdünnter Phosphorsäure hergestellt. Obwohl ihre Konzentration mit Hilfe eines rechnerischen Gehalts an Phosphorpentoxid angegeben wird, enthalten sie kein Phosphorpentoxid, sondern, je nach Konzentration, wechselnde Mengen höher kondensierter Phosphorsäuren der allgemeinen Formel H₍ₙ₊₂₎PₙO₍₃ₙ₊₁₎ in Mischung, Polyphosphorsäuren genannt. Derartige Polyphosphorsäuren sind im Chemikalienhandel erhältlich. Das erfindungsgemäße Verwenden der Polyphosphorsäuren hat die folgenden wesentlichen Vorteile: Die Polyphosphorsäuren wirken hygroskopisch und vermitteln den Graphitprodukten, die mit ihrer Verwendung hergestellt worden sind eine größere Oxidationsstabilität, eine geringere Permeabilität für Fluide und eine größere Festigkeit. Durch ihre hygroskopische Wirkung nehmen sie in der Reaktionsmischung vorhandenes Wasser auf oder/und sie binden während des Reaktionsablaufs entstehendes Wasser. Die Reaktionsmischung hat deshalb immer ein Minimum an Wassergehalt. Die Hydrolyse der entstandenen Graphiteinlagerungsverbindungen wird dadurch zurückgedrängt und es wird ein Optimum an Einlagerungen erreicht. Letzteres ist eine Vorraussetzung für ein gutes Expansionsvermögen der so hergestellten Graphiteinlagerungsverbindungen und für eine gute Struktur der aus ihnen hergestellten Graphitexpandate. Aus dem Vorstehenden folgt, daß die nach dem Verfahren erhaltenen Graphiteinlagerungsverbindung auch nach der Beendigung der Einlagerungsreaktion nur isoliert werden aber nicht mit Wasser in Berührung gebracht werden dürfen. Im Gegensatz zu Phosphorpentoxid liegen die Polyphosphorsäuren in flüssiger Form vor und lassen sich deshalb, was für das Durchführen des Verfahrens im großen Maßstab von besonderer Bedeutung ist, ohne Schwierigkeiten hantieren. Außerdem können sie dem Graphit, den Säuren oder Säuremischungen und der Reaktionsmischung zu jedem Zeitpunkt beigegeben werden, ohne daß eine schädliche Erwärmung stattfindet. Es ist zweckmäßig, die Polyphosphorsäure vor Beginn der Einlagerungsreaktion oder vor dem Vermischen der Reaktanden mit dem Naturgraphit zuzugeben.

Aus Vereinfachungsgründen wird, falls dies möglich ist, im folgenden und in den Ansprüchen der technische Terminus "thermische Polyphosphorsäure" oder "Polyphosphorsäure" in der Einzahl verwendet, obgleich es sich hier jeweils um Mischungen mehrerer kondensierter Phosphorsäuren handelt.

Der Zusatz an Polyphosphorsäure kann in weiten Grenzen variieren. Er liegt, bezogen auf die Summe aus der zum Einlagern bestimmten Säure und dem Oxidationsmittel = 1, im Bereich von 1 zu 0,002 bis 1 zu 1 Gewichtsteilen. Für die meisten praktischen Fälle reicht allerdings ein Zusatzverhältnis von 1 zu 0,005 bis 1 zu 0,1 Gewichtsteilen aus. Nach einer bevorzugten Variante der Erfindung wird mit einem Zusatzverhältnis von 1 zu 0,005 bis 1 zu 0,03
Gewichtsteilen gearbeitet.

Die Menge an Flüssigkeiten, die für das Umsetzen mit dem Graphit verwandt wird und die aus dem Einlagerungsagens, dem Oxidationsmittel und der Polyphosphorsaure besteht,
liegt im Bereich von 33 bis 200 Gewichtsteilen Flüssigkeit zur 100 Gewichtsteilen Graphit. Wieviel Flüssigkeit im Einzelfall verwandt wird, hängt von den Gegebenheiten des Einzelfalles ab und wird jeweils vom Fachmann entschieden. Im allgemeinen ist es aus Gründen der Verfahrensökonomie und des Umweltschutzes vorteilhaft, mit möglichst wenig Flüssigkeit, d.h., im Bereich von 33 bis 50 Gewichtsteilen Flüssigkeit zu 100 Gewichtsteilen Graphit zu arbeiten. Im letzteren Fall kann das Reaktionsprodukt ohne weitere Zwischenschritte oder -behandlung gelagert oder
direkt expandiert werden. Falls jedoch mit größeren Mengen Flüssigkeit gearbeitet werden muß, wird der Überschuß an Reaktionsflüssigkeit nach Abschluß der Einlagerungsreaktion von der Einlagerungsverbindung nach einem der bekannten Methoden abgetrennt und die so erhaltene Einlagerungsverbindung zwischengelagert oder weiterverarbeitet. Die so erhaltenen Graphiteinlagerungsverbindungen haben ein exzellentes Expansionsvermögen. Es liegt bei mindestens 1 zu 200 d.h., ein cm³ durch Schütten erhaltener Einlagerungsverbindung nimmt nach dem Expandieren ein Volumen von mindestens 200 cm³ ein. In den meisten Fällen werden Expansionsfaktoren von ca. 1 zu 300 erreicht. Das Expandieren geschieht durch möglichst schnelles Einwirken von hohen Temperaturen auf die Graphiteinlagerungsverbindung. Es kann nach einem der bekannten Verfahren, beispielsweise durch Durchblasen der Einlagerungsverbindung durch die Flamme eines Brenners oder durch Durchleiten der Einlagerungsverbindung durch ein auf die vorgegebene Temperatur erhitztes Rohr vorgenommen werden. Beim Expandieren wird mit Temperaturen von mindestens 800 °C, bevorzugt mit Temperaturen von 1000°C und mehr gearbeitet. Bei diesen Temperaturen wird das Expansionspotential der Graphiteinlagerungsverbindungen in vollem Maße ausgeschöpft und man erhält Expandate mit einem Schüttgewicht von 3 g/l oder weniger. Nach einer vorteilhaften Variante der Erfindung besteht die flüssige Phase in der Reaktionsmischung aus hoch konzentrierter Salpetersäure von mindestens 80 Gew.-% und aus thermischer Polyphosphorsäure. Die Salpetersäure dient hier sowohl als Oxidationsmittel als auch als Einlagerungsagens. Vorzugsweise wird bei dieser Variante rote, rauchende Salpetersäure verwendet. Diese Einlagerungsreaktion kann zufriedenstellend nur in wasserarmen Medien stattfinden, da für ihren Verlauf aus Salpetersäure unter Freisetzen von Wasser das Nitroniumion NO₂⁺ gebildet werden muß, das den Graphit oxidiert und ihn dadurch für das Einlagern von Nitrat und Phosphationen vorbereitet (Carbon, Vol.16, 1978, p. 269 - 271). Bei Vorhandensein von Wasser wird diese Reaktion zur Seite der Salpetersäure verschoben und es stehen zu wenig Nitroniumionen zur Verfügung. Es ist ein wesentlicher Vorteil der Erfindung, für diese Reaktion als wasserbindendes Mittel die thermischen Polyphosphorsäuren zur Verfügung gestellt zu haben. Die Reaktion wird erst dadurch in technischem Maßstab durchführbar, weil, wie im Vorstehenden ausgeführt worden ist, ein Arbeiten mit Phosphorpentoxid mit zu großen praktischen Schwierigkeiten verbunden ist und, wie eigene praktische Arbeiten und auch die vorzitierte US 3 333 941 zeigen, zu ungenügenden Ergebnissen führen. Ein weiterer großer Vorteil der Verwendung von thermischer Polyphosphorsäure liegt darin, daß sie im Gegensatz zu Phosphorpentoxid mit Salpetersäure praktisch ohne Temperaturerhöhung mischbar ist. Dies wirkt sich ebenfalls positiv auf den Reaktionsverlauf aus, da die in der Reaktionsmischung entstehenden Einlagerungsverbindungen bei zu großer Temperatursteigerung einen Teil der eingelagerten Substanzen mit der Folge wieder abgeben können, daß ihr Expansionsvermögen geringer wird. Ein Zusatz von Phosphorpentoxid zur Salpetersäure führt dagegen zu einer kräftigen Temperaturerhöhung in deren Folge zusätzlich zu dem vorbeschriebenen negativen Effekt nitrose Gase in erheblichem Umfang freigesetzt werden, die dann für die Einlagerungsreaktion nicht mehr genutzt werden können. Es ist wesentlich, daß die Polyphosphorsäure einen genügend großen Gehalt an kondensierten Phosphorsäuren der allgemeinen Formel H₍ₙ₊₂₎PₙO₍₃ₙ₊₁₎ enthält. Diese sind in der Lage, Wasser aufzunehmen und die Einlagerungsreaktion wie vorbeschrieben zu unterstützen. Letzteres ist besonders ausgeprägt, wenn eine Polyphosphorsäure mit einem rechnerischen Gehalt von 84 Gew.-% Phosphorpentoxid verwendet wird. Bei Anwendung dieses Säuretyps kann, wo dies möglich ist, auch mit einer vergleichsweise geringeren Zusatzmenge an thermischer Polyphosphorsäure gearbeitet werden.

Es kann aber auch mit thermischen Polyphosphorsäuren gearbeitet werden, die einen niedrigeren rechnerischen Gehalt an Phosphorpentoxid haben. Die Verwendung solcher Säuretypen ist dann sinnvoll, wenn geringere Mengen an Wasser gebunden werden müssen oder wenn es das Ziel ist, viel Phosphat in die Reaktionsmischung einzubringen. Unter Umständen muß bei dieser Vorgehensweise dann mit einer größeren Menge an Polyphosphorsäure gearbeitet werden, wenn sichergestellt werden muß, daß die Reaktionsmischung eine genügende Kapazität zum Aufnehmen von Wasser hat. Ein Beispiel für einen derartigen Säuretyp ist eine thermische Polyphosphorsäure mit einem rechnerischen Phosphorpentoxidgehalt von 76 Gew.-%.

Die zugesetzte Menge thermischer Polyphosphorsäure kann in einem Bereich von 1 Gewichtsteil Salpetersäure zu 0,002 Gewichtsteilen Polyphosphorsäure bis 1 Gewichtsteil Salpetersäure zu 1,0 Gewichtsteil Polyphosphorsäure liegen. Nach einer bevorzugten Version liegt die zugesetzte Menge thermischer Polyphosphorsäure im Bereich von 1 Gew.-Teil Salpetersäure zu 0,005 Gew.-Teilen Polyphosphorsäure bis zu 1 Teil Salpetersäure zu 0,25 Teilen Polyphosphorsäure. Nach einer weiteren bevorzugten Version liegt die zugesetzte Menge thermischer Polyphosphorsäure im Bereich von 1 Gew.-Teil Salpetersäure zu 0,005 Gew.-Teilen Polyphosphorsäure
bis zu 1 Gew.-Teil Salpetersäure zu 0,1 Gew.-Teilen Polyphosphorsäure. Nach einer besonders bevorzugten Variante der Erfindung wird der Reaktionsmischung eine Mischung aus Salpetersäure und thermischer Polyphosphorsäure zugesetzt, die im Bereich von 1 Gew.-Teil Salpetersäure zu 0,005 Gew.-Teilen Polyphosphorsäure bis zu 1 Gew.-Teil Salpetersäure zu 0,03 Gew.-Teilen Polyphosphorsäure liegt.

Nach einer aus verfahrensökonomischen und Umweltschutzgründen bevorzugten Variante des
Verfahrens wird mit einem Mischungsverhältnis im Bereich von 100 Gewichtsteilen Graphit zu 33 bis 50 Gewichtsteilen flüssiger Phase gearbeitet. Bestandteile der Reaktionsmischung können außer den hier beschriebenen Substanzen auch an sich bekannte Zusätze wie beispielsweise Molybdänverbindungen sein, die die Qualität der Endprodukte beeinflussen oder verbessern. In den meisten Fällen ist der nächste Verarbeitungsschritt das
Expandieren, dasnach einem der bekannten Verfahren vorgenommen wird. Wenn das Expansionsvermögen der Graphiteinlagerungsverbindung in vollem Maße ausgeschöpft werden soll, muß mit Expansionstemperaturen von mindestens 800°C und vorzugsweise von
mindestens 1000°C gearbeitet werden. Es wird dann ein expandierter Graphit mit einem Schüttgewicht von höchstens 3 g/l erhalten. Bei optimaler Reaktionsführung liegen die Schüttgewichte trotz des verbliebenen Phosphatgehalts bei 2 g/l

Die aus den Graphiteinlagerungsverbindungen hergestellten Graphitexpandate können zu einer Vielzahl von Produkten weiterverarbeitet werden. Neben anderen sind dies im wesentlichen Graphitfolien, Graphitlaminate und Graphitplatten. Die drei letztgenannten Produkte können z.B. für Zwecke der Wärmeerzeugung mittels des Joule'schen Prinzips, für Zwecke der Wärmeleitung oder als Hitzeschilde verwendet werden. Ihr hauptsächlicher Verwendungszweck liegt jedoch im Herstellen von Dichtungsmaterialien der verschiedensten Art, vor allen Dingen jedoch von Flachdichtungen, Packungsringen und Packungsgarnen. Nach dem erfindungsgemäßen Verfahren hergestellte Materialien und damit auch die Dichtungen, weisen eine sehr gute Oxidationsfestigkeit und sehr niedrige Permeabilitätswerte für Fluide auf. (Unter dem Begriff Fluide sollen in dieser Patentanmeldung sowohl flüssige als auch gasförmige Medien verstanden werden.) Außerdem haben sie gute Festigkeitswerte, wobei entweder Materialien mit verbesserter Druckfestigkeit oder mit verbesserter Zugfestigkeit hergestellt werden können. Die anderen hervorragenden Eigenschaften von Produkten, die aus expandiertem Graphit produziert werden wie Hochtemperaturfestigkeit oder Korrosionsbeständigkeit werden durch das neue Herstellungsverfahren nicht beeinträchtigt.

Nach einer besonderen Verfahrensvariante der Erfindung, bei der die Reaktionsmischung mindestens 10 Gewichtsteile thermische Polyphosphorsäure, bezogen auf 1 Gewichtsteil einer der anderen genannten Säuren oder einer daraus herstellbaren Säuremischung enthält und bei der die erhaltene Graphiteinlagerungsverbindung bei einer Temperatur von mindestens 800°C expandiert wird, erhält man nach dem Verdichten Dichtungsfolien oder -laminate, die eine Gasdurchlässigkeit nach DIN 28090 - 1 (Vorversuch) für Stickstoff, bezogen auf ein Flächengewicht von 2000 g/m² von kleiner gleich 0,06 mg/(m·s) hat. Ein derartig niedriger Permeabilitätswert ist für Graphitdichtungen, die nicht speziell imprägniert oder beispielsweise mit einer Metalleinlage armiert sind, ungewöhnlich und bis jetzt im technischen Maßstab nicht erreicht worden.

Im folgenden wird die Erfindung anhand von Ausführungsbeispielen weiter erläutert ohne daß dadurch der Umfang der Erfindung eingeschränkt werden soll.

### Beispiel 1:

In einem ersten Teilversuch wurden in einem mit einem Rührer, einem Dosiergefäß für rote, rauchende Salpetersäure, einem Innenthermometer und einer Gasabführung ausgestatten Mehrhalskolben 10 g Phosphorpentoxid vorgelegt und sodann unter Rühren 30 g Salpetersäure mit einem HNO₃-Gehalt von 100 Gew.-% innerhalb von 5 Minuten zugetropft. Beide Substanzen hatten vor dem Vermischen eine Temperatur von 28°C. Sofort nach Beginn des Zugebens geriet die Salpetersäure ins Sieden und es setzte eine heftige Entwicklung von nitrosen Gasen ein, die durch die Entlüftungsleitung aus dem Gefäß austraten. Das Entwickeln von nitrosen Gasen dauerte während der gesamten Dauer des Zugebens von Salpetersäure an und hörte erst nach Beginn des Abkühlens der Reaktionsmischung auf. Erst nach einem Zeitraum von weiteren 15 Minuten, während dessen intensiv gerührt worden war, waren keine Zusammenbackungen oder Teile von Phosphorpentoxid, sondern nur mehr einige Schlieren erkennbar.

In einem zweiten Teilversuch wurden in dem Mehrhalskolben 10 g thermische Polyphosphorsäure von einem rechnerischen Phosphorpentoxidgehalt von 84 Gew.-% vorgelegt und dieser Polyphosphorsäure während der gleichen Zeit wie unter Teilversuch eins 30 g Salpetersäure der gleichen Konzentration wie unter Teilversuch eins zugetropft. Die thermische Polyphosphorsäure hatte eine zähflüssige Konsistenz. Die Ausgangstemperatur der beiden Flüssigkeiten betrug 27°C. Beim und während der gesamten Zeit des Zumischens der Salpetersäure zur Phosphorsäure wurde keine Temperaturerhöhung in der Mischung festgestellt. Die Salpetersäure vermischte sich problemlos in der vorgelegten thermischen Polyphosphorsäure trotz deren zähflüssigen Konsistenz. Die Mischung war nach weiteren fünf Minuten Rührzeit völlig klar und frei von Schlieren. Die beobachtete, schwache Entwicklung von nitrosen Gasen entsprach dem Maß, das für rote, rauchende Salpetersäure üblich ist, wenn diese mit Raumluft in Berührung kommt. Die für diesen und die im folgenden beschriebenen Versuche verwendeten thermischen Polyphosphorsäuren wurden von der Fa. Clariant, Werk Knapsack, Deutschland, bezogen.

In einem dritten Teilversuch wurden 20 g der nach dem zweiten Teilversuch hergestellten Mischung aus 10 Gewichtsteilen thermischer Polyphosphorsäure mit einem rechnerischen Gehalt an Phosphorpentoxid von 84 Gew.-% und 30 Gewichtsteilen Salpetersäure bei 23°C mit 50 g Flockengraphit (Grade 2901, Lieferant Superior Graphite, Chicago/USA) in einem Glasbehälter mit flachem Boden und eingeschliffenen Deckelteil, das Durchführungen für einen Rührer und das Dosiergefäß für die Flüssigkeiten, sowie einen Gasabzug hatte, unter Rühren 5 Minuten lang sorgfältig vermischt. Die Säuremischung konnte problemlos und gleichmäßig in dem Graphit verteilt werden. Die Temperatur stieg dabei auf 27°C. Nach den genannten 5 Minuten wurde die entstandene Graphiteinlagerungsverbindung entnommen und bei 800°C in Luft expandiert. Dazu wurde die Einlagerungsverbindung spatelweise in eine auf Expansionstemperatur aufgeheizte Quarzschale gegeben und diese mit dem Inhalt unmittelbar danach für weitere drei Minuten in einen auf 800°C aufgeheizten Ofen gestellt. Der auf diesem Wege resultierende, expandierte Graphit hatte eine gut strukturierte, aus dünnen, voneinander getrennten Schüppchen bestehende wurmförmige Gestalt mit einem Schüttgewicht von 1,9 g/l. Das Schüttgewicht wurde durch loses Einschütten des Graphitexpandats in einen 500-ml Meßzylinder und Feststellen des Gewichts des am Meßzylinder abgelesenen Volumens des eingefüllten Graphitexpandats bestimmt. Eine entsprechende Menge Graphitexpandats wurde sodann in einem Stahlrohr von 90 mm Durchmesser mittels eines Druckkolbens zu einem Vorpreßling vorverdichtet. Nach dem Entnehmen aus der Vorpreßeinrichtung wurde der Vorpreßling in einem Muffelofen bei 800 °C ca. 20 Sekunden lang ausgeheizt und danach in einer Matritze auf einer Gesenkpresse unter einem Druck von ca. 1,5 N/mm² verpreßt.

Nach einem erneuten Ausheizschritt wurde die Folie in der Gesenkpresse auf eine Dicke von 1 mm endverpreßt. Aus Gründen eines besseren Vergleichs wurde die Menge des eingesetzten Graphitexpandats hier und auch bei den im folgenden beschriebenen Versuchen so gewählt, daß eine Folie mit einer Rohdichte von 1,0 g/cm³ und einer Dicke von 1 mm resultierte. Diese Folie hatte eine Druckfestigkeit von 154 MPa. Das Meßverfahren zum Bestimmen der Druckfestigkeit wird unter Ausführungsbeispiel 2 beschrieben.

In einem vierten Teilversuch wurden in einer Versuchsanordnung wie sie in Teilversuch 3 beschrieben worden ist, 5 g Phosphorpentoxid mit 50 g Naturgraphit der gleichen Qualität wie in Teilversuch drei 5 Minuten lang gemischt. Beim Mischen erwärmt sich die Masse stark und es bilden sich Klumpen, die durch das Mischen nicht aufgelöst werden können, so daß von einer ungleichen Verteilung des Phosphorpentoxids über das gemischte Gut ausgegangen werden muß. Sodann wurden der Mischung aus Graphit und Phosphorpentoxid 15 g Salpetersäure mit einem HNO₃-Gehalt von 100 Gew.-% unter ständigem Rühren zugegeben und 5 Minuten lang gerührt. Diese Zugabe war von einer starken Entwicklung von nitrosen Gasen begleitet. Das so hergestellte Graphitsalz wurde wie in Teilversuch 3 beschrieben, bei 800°C expandiert und das dadurch erhaltene Graphitexpandat zu einer 1 mm dicken Graphitfolie mit einer Rohdichte von 1,0 g/cm³ verarbeitet.

Der expandierte Graphit hatte ein Schüttgewicht von 2,2 g/l und die Graphitfolie eine Druckfestigkeit von nur 132 MPa.

Der expandierte Graphit zeigte bei insgesamt befriedigender Struktur Inhomogenitäten durch nicht voll expandierte Teilchen und auch an der Graphitfolie wurden Fehlstellen festgestellt, die auf das Einbinden und Einpressen von nicht voll expandierten Teilchen der Einlagerungsverbindung zurückzuführen waren. Derartige Fehlstellen sind für eine hochwertige Graphitfolie nicht tragbar.

Die Teilversuche 1 bis 4 des Ausführungsbeispiels 1 zeigen, daß das Arbeiten mit Phosphorpentoxid erhebliche technische Schwierigkeiten mit sich bringt und daß deshalb damit lediglich Graphiteinlagerungsverbindungen, expandierte Graphite und Graphitfolien oder -platten von mäßiger Qualität hergestellt werden können. Aus ihnen werden aber auch bereits die Vorteile des Verwendens von thermischer Polyphosphorsäure offenbar. Diese werden durch die folgenden Ausführungsbeispiele weiter herausgestellt.

### Beispiel 2:

Mit diesem Beispiel wurde der Einfluß des Inhalts verschiedener Mengen an thermischer Polyphosphorsäure in der Reaktionsmischung beim Herstellen von Graphiteinlagerungsverbindungen unter Verwenden von roter, rauchender Salpetersäure untersucht.

Über die Verteilung der Anteile an Reaktanden bei den Teilversuchen gibt Tabelle 1 Auskunft:

**Tabelle 1**

| Anteile der Reaktanden beim Verwenden von roter, rauchender Salpetersäure als Einlagerungs- und Oxidationsagens | | | |
|---|---|---|---|
| Flüssiganteile des Reaktionsgemisches | | | Verhältnis Naturgraphit zu Flüssiganteil (Gewichtsteile) |
| HNO₃ (Gew.-Teile) | PPS (Gew.-Teile) | Konz. an PPS (%) | |
| 40 | 0 | 0 | 100/40 |
| 39,6 | 0,4 | 1 | 100/40 |
| 38 | 2 | 5 | 100/40 |
| 30 | 10 | 25 | 100/40 |

| | | | |
|---|---|---|---|
| PPS = thermische Polyphosphorsäure | | | |

Die Reaktanden wurden wie unter Beispiel 1, Teilversuch 3 beschrieben, umgesetzt und es wurden wie dort beschrieben worden ist, aus der Graphiteinlagerungsverbindung Expandat und aus diesem eine Graphitfolie von 1 mm Dicke und mit einer Rohdichte von 1 g/cm³ hergestellt. Als Naturgraphit wurde Graphit Grade 2901 von der Fa. Superior Graphite Chicago/USA verwendet. Bei dem ersten Beispiel der Tabelle 1 handelt es sich um ein nicht erfinungdgemäßes Vergleichsbeispiel.

Tabelle 2 gibt die an dem Graphitexpandat und der daraus gewonnenen Folie ermittelten Kennwerte wieder:

**Tabelle 2**

| Zusammensetzung der Flüssigphase (Gew.-Teile) | Naturgraphit/Säuregemisch (Gew.-T.) | Expandatschüttgewicht (g/l) | Kenndaten d. Graphitfolie | | |
|---|---|---|---|---|---|
| | | | Leckage (mg/(s•m)) | Masseverlust (600°C) (%/h) | Zugfestigkeit (Nimm²) |
| 100 Teile HHO₃ | 100/40 | 2,9 | 0,124 | 1.81 | 3,02 |
| 0,4 T PPS/39,6 T HNO₃ | 100/40 | 2,4 | 0,082 | 0,6 | 3,24 |
| 2 T PPS/38 T HNO₃ | 100/40 | 2,1 | 0,073 | 0,6 | 3,56 |
| 10 T PPS/30 T HNO₃ | 100/40 | 1,9 | 0,038 | 1,45/0, 6 | 3,71 |
| 2 T PPS/38T HNO₃ | 100/25 | 4,0 | 0,105 | 0,37 | 2,42 |
| 2 T PPS/38 T HNO₃ | 100/50 | 2,3 | 4,096 | 0,78 | 3,42 |

| | | | | | |
|---|---|---|---|---|---|
| PPS = thermische Polyphosphorsäure T = Gewichtsteile | | | | | |

Im folgenden werden die Bestimmungsmethoden für die Meß-daten erläutert, die im Zusammenhang mit den hier beschriebenen Ausführungsbeispielen aufgeführt worden sind. Die Methode für das Ermitteln des Expandatschüttgewichts ist im Vorstehenden unter dem dritten Teilversuch von Beispiel 1 bereits dargelegt worden. Bei dem ersten und bei dem fünften Beispiel der Tabelle 2
handelt es sich um ein nicht erfinungdgemäßes Vergleichsbeispiel.

Die Messungen der Leckage wurden in Anlehnung an DIN 28090-1 (Vorversuch) mit Flachdichtungen der Abmessungen Innendurchmesser 50 mm, Außendurchmesser 90 mm durchgeführt. Die Dicke der Dichtung vor Beginn der Leckagemessung betrug 1 mm, der Innendruck
der Prüfapparatur 40 bar. Als Prüfgas wurde Stickstoff verwendet.

Der Masseverlust als Maß für die Widerstandsfähigkeit gegen oxidativen Angriff wurde mittels eines Rohrofens bestimmt, dessen Innendurchmesser 7 cm betrug. Eine Graphitprobe von 50 mm Durchmesser wurde senkrecht mit ihrer Schmalseite in Richtung der Ofenlängsachse in der Mitte des Rohres, das auf eine Temperatur von 600 °C aufgeheizt worden war, positioniert und dann für 2 Stunden einem Luftstrom von 100 1/Stunde ausgesetzt. Als Normwert für den Masseverlust wurde die Hälfte des durch Wägung bestimmten Gewichtsverlustes verwendet, den die dem Rohr entnommene Graphitprobe nach dem Abkühlen aufwies.

Die Druckfestigkeit der aus dem expandierten Graphit hergestellten Graphitprodukte wurde in Anlehnung an die DIN 28090 mit Dichtungsringen mit einem Innendurchmesser von 55 mm und mit einem Außendurchmesser von 75 mm bestimmt. Auch hier betrug die Dicke der Dichtung vor Beginn der Messung 1 mm.

Das Ermitteln der Zugfestigkeit geschah unter Verwendung von Zugproben aus Graphitfolien mit einer Breite von 10 mm und einer Einspannlänge von 50 mm in einer Einspindelzugprüfmaschine des Typs Zwicki Z 2.5 der Firma Zwick Ulm/Deutschland. Die Abzugsgeschwindigkeit betrug dabei 1 mm/Minute.

Die Meßwerte der ersten vier Zeilen der Tabelle 2 zeigen, daß durch Zusetzen von thermischer Polyphosphorsäure zu Salpetersäure beim Einlagerungsprozeß erhebliche Verbesserungen bei der Dichtheit und der Widerstandsfähigkeit der Folien gegenüber Oxidation erreicht werden. Die Leckagewerte sinken mit steigenden Mengen zugesetzter Polyphosphorsäure ab. Der vergleichsweise große Wert für den Masseverlust von 1,45 %/h in Zeile 4 der Tabelle 2 ist wie zusätzliche Versuche gezeigt haben, darauf zurückzuführen, daß beim Expandieren des Graphitsalzes die flüchtigen Phosphorverbindungen, die beim Einlagerungsprozeß aufgenommen werden, nicht vollständig verdampft sind und entfernt wurden. Folgeversuche, bei denen bei höheren Temperaturen, d.h. bei Temperaturen bis zu 1000 °C expandiert worden ist oder bei denen die Vorprodukte für die Folien längere Zeit bei 800 °C ausgeheizt worden waren, ergaben Werte für den Masseverlust von 0,6 %/Stunde. Auch das Schüttgewicht nimmt gegenüber der Vergleichsprobe auf Werte im Bereich von 2 g/l ab, was ein Zeichen für ein besseres Expansionsvermögen der jeweiligen Graphiteinlagerungsverbindung und für ein lockereres und sich beim Verdichten zu Formkörpern besser verzahnendes Graphitexpandat ist. In dem Maße, wie das Expandatschüttgewicht sinkt, nimmt vorteilhafter Weise die Zugfestigkeit der Graphitfolien zu. Die in der Tabelle 2 nicht aufgeführten Druckfestigkeiten erfahren durch die Zugabe der Polyphosphorsäure in diesem Falle keine signifikante Änderung. Sie liegen für die Vergleichs- und die Versuchsproben im Bereich von 145 MPa.

Beim Einbeziehen der Meßwerte der Zeilen 5 und sechs der Tabelle 2 sieht man, daß auch beim Variieren der dem Graphit zugesetzten Menge an Einlagerungsagens die Werte für die Leckage und den Masseverlust verbessert sind. Die Zugfestigkeit ist bei der Variante mit einer Zugabemenge an Einlagerungsagens von 25 Gewichtsteilen abgesunken, was im Einklang mit dem vergleichsweise hohen Schüttgewicht steht. Die Druckfestigkeit, die nicht in der Tabelle aufgeführt ist, liegt hier mit 145 MPa im üblichen Bereich der Vergleichsprobe. Bei der Variante mit der erhöhten Zugabemenge an Einlagerungsagens wird wieder und auch im Einklang mit dem guten Wert für das Expandatschüttgewicht eine gegenüber der Vergleichsprobe verbesserte Zugfestigkeit gefunden. Die in der Tabelle nicht verzeichnete Druckfestigkeit liegt bei dieser Probe mit 137 MPa im unteren Bereich der Werte für die Vergleichsprobe. Aus dem Vorstehenden ist zu sehen, daß es der Fachmann beim Anwenden der Lehre der Erfindung in der Hand hat, aus Graphiteinlagerungsverbindungen, die unter Verwendung von Salpetersäure und thermischer Polyphosphorsäure hergestellt worden sind, Graphitkörper, insbesondere Graphitfolien und -platten mit erheblich verbesserten Eigenschaften herzustellen. Es ist ihm dabei möglich, bestimmte Eigenschaften, insbesondere die Werte für die Leckage, den Masseverlust und die Zugfestigkeit gezielt zu beeinflussen.

### Beispiel 3:

In den Versuchen zu diesem Ausführungsbeispiel wird der Zusatz der thermischen Polyphosphorsäure zu Mischungen aus roter, rauchender Salpetersäure und konzentrierter Schwefelsäure mit einer H₂SO₄-Konzentration von 95 bis 97 Gew.-%, bezogen auf die Säure bestimmt. Tabelle 3 gibt die Anteile der Reaktanden wieder, die beim Durchführen der Versuche verwendet wurden:

**Tabelle 3**

| Flüssiganteile des Reaktionsgemisches | | | | Verhältnis Naturgraphit zu Flüssiganteil (Gewichtsteile) |
|---|---|---|---|---|
| HNO₃ (Gew.-Teile) | H₂SO₄ (Gew.-Teile) | PPS (Gew.-Teile) | Konz. an PPS (%) | |
| 20 | 20 | 0 | 0 | 100/40 |
| 19 | 19 | 2 | 5 | 100/40 |
| 15 | 15 | 10 | 25 | 100/40 |

| | | | | |
|---|---|---|---|---|
| PPS = thermische Polyphosphorsäure | | | | |

Die Reaktanden wurden wie unter Beispiel 1, Teilversuch 3 beschrieben, umgesetzt und es wurden wie dort beschrieben worden ist, aus den Graphiteinlagerungsverbindungen Expandate und aus diesem Graphitfolien von 1 mm Dicke und mit einer Rohdichte von 1 g/cm³ hergestellt. Als Naturgraphit wurde Graphit Grade 2901 von der Fa. Superior Graphite Chicago/USA verwendet. Bei dem ersten Beispiel der Tabelle 3 handelt es sich um ein nicht erfinungdgemäßes
Vergleichsbeispiel.

Tabelle 4 gibt die an den Graphitexpandaten und den daraus gewonnenen Folien ermittelten Kennwerte wieder:

**Tabelle 4**

| Zusammensetzung der Flüssigphase (Gew.-Teile) | Naturgraphit/ Säuregemisch (Gew.-T.) | Expandatschüttgewicht (g/l) | Kenndaten d. Graphitfolie | | |
|---|---|---|---|---|---|
| | | | Leckage (mg/(s·m)) | Masseverlust (600°C) (%/h) | Zugfestigkeit (N/mm²) |
| 20 T ENO₃/20 T H₂SO₄ | 100/40 | 2,0 | 0,168 | 1,33 | 3,5 |
| 19 T HNO₃/19 T H₂SO₄/ 2 T PPS | 100/40 | 1,9 | 0,102 | 0,64 | 3,35 |
| 15 T HNO₃/15 T H₂SO₄/ 10 T PPS | 100/40 | 1,8 | 0,033 | 0,76 | 3,25 |

| | | | | | |
|---|---|---|---|---|---|
| PPS = thermische Polyphosphorsäure T = Gewichtsteile | | | | | |

Aus den Meßwerten der Tabelle 4 ist zu entnehmen, daß auch ein Zusetzen von thermischer Polyphosphorsäure zu einer Einlagerungsmischung, die aus einer Mischung aus Salpetersäure und konzentrierter Schwefelsäure besteht, sehr vorteilhaft ist und zu einer erheblichen Verbesserung der
Leckagewerte und des Massenverlustes der aus der entsprechenden Einlagerungsverbindung hergestellten Graphit-folien führt.
Bei dem ersten Beispiel der Tabelle 4 handelt es sich um ein nicht erfinungdgemäßes Vergleichsbeispiel.

Die Werte für die Zugfestigkeit liegen entsprechend den insgesamt guten Werten für das Expandat-schüttgewicht auf hohem Niveau. Die Druckfestigkeiten, die
in der Tabelle nicht angegeben sind, weisen hier eine größere Streuung auf. Der Mittelwert liegt im Bereich von 140 MPa und damit auf mittlerem Niveau. Das Expandatschüttgewicht ist hier auch ohne Zusatz von Polyphosphorsäure bereits sehr niedrig. Die durch den Zusatz der Polyphosphorsäure bewirkte Verbesserung zu noch niedrigeren Werten konnte deshalb nur gering ausfallen.

### Beispiel 4:

In den Versuchen zu diesem Ausführungsbeispiel wird der Zusatz von thermischer Polyphosphorsäure zu Mischungen aus konzentrierter Schwefelsäure mit einer H₂SO₄-Konzentration von 95 bis 97 Gew.-%, bezogen auf die Säure und einer Lösung von Wasserstoffperoxid mit einem H₂O₂-Gehalt von 85 Gew.-% in der Lösung (Lieferant Merck AG, Deutschland) untersucht. Tabelle 5 gibt die Anteile der Reaktanden wieder, die beim Durchführen der Versuche verwendet wurden:

**Tabelle 5**

| Flüssiganteile des Reaktionsgemisches | | | | Verhältnis Naturgraphit zu Flüssiganteil (Gewichtsteile) |
|---|---|---|---|---|
| H₂SO₄ (Gew.-Teile) | H₂O₂-Lösung (Gew.-Teile) | PPS (Gew.-Teile) | Konz. an PPS (%) | |
| 36 | 4 | 0 | 0 | 100/40 |
| 27 | 3 | 10 | 25 | 100/40 |

| | | | | |
|---|---|---|---|---|
| PPS = thermische Polyphosphorsäure | | | | |

Die Reaktanden wurden wie unter Beispiel 1, Teilversuch 3 beschrieben, umgesetzt und es wurden wie dort beschrieben worden ist, aus den Graphiteinlagerungsverbindungen Expandate und aus diesen Graphitfolien von 1 mm Dicke und mit einer Rohdichte von 1 g/cm³ hergestellt. Als Naturgraphit wurde Graphit Grade 2901 von der Fa. Superior Graphite, Chicago/USA verwendet. Bei dem ersten Beispiel der Tabelle 5 handelt es sich um ein nicht erfinungdgemäßes Vergleichsbeispiel.

Tabelle 6 gibt die an den Graphitexpandaten und den daraus gewonnenen Folien ermittelten Kennwerte wieder:

**Tabelle 6**

| Zusammensetzung der Flüssigphase (Gew.-Teile) | Naturgraphit/ Säuregemisch (Gew.-T.) | Expandatschüttgewicht (g/l) | Kenndaten d. Graphitfolie | | |
|---|---|---|---|---|---|
| | | | Leckage (mg/(s.m)) | Masseverlust (600°C) (%/h) | Zug-festig-keit (N/mm²) |
| 36 T H₂SO₄/4 T l1₂0₂ | 100/40 | 3,4 | 0,186 | 1,64 | 2,1 |
| 27 T H₂SO₄/3 T l1₂0₂/ 10 T PPS | 100/40 | 3,0 | 0,045 | 1,17 | 1,9 |

| | | | | | |
|---|---|---|---|---|---|
| PPS = thermische Polyphosphorsäure T = Gewichtsteile | | | | | |

Die der Tabelle 6 entnehmbaren Kenndaten zeigen ebenfalls, daß sich ein Zusatz von thermischer Polyphosphorsäure auch bei einer Einlagerungsmischung aus konzentrierter Schwefelsäure und einer Wasserstoffperoxidlösung vorteilhaft auswirkt. Bei dem ersten Beispiel der Tabelle 6 handelt es sich um ein nicht erfinungdgemäßes Vergleichsbeispiel.
Hier sind ebenfalls sehr positive Effekte auf das Leckageverhalten und auf den Masseverlust als Maß für die Beständigkeit gegen oxidativen Angriff abzulesen. Obgleich die Schüttgewichte der Expandate vergleichsweise hoch liegen, verursacht der Zusatz von Polyphosphorsäure eine graduelle Verbesserung. Die Werte für die Zugfestigkeit sind im Einklang mit den großen Schüttgewichten niedrig. Entsprechend sind jedoch die Werte für die nicht aufgeführten Druckfestigkeiten, mit 160 MPa für die Vergleichsfolie und mit 170 MPa für die Versuchsfolie mit PPS-Zusatz vorteilhaft hoch.

### Beispiel 5:

In den Versuchen zu diesem Ausführungsbeispiel wird die Verwendung von zwei thermischen Polyphosphorsäuren, nämlich einer Säure mit einem rechnerischen Gehalt an Phosphorpentoxid von 76 Gew.-% und einer Säure mit einem rechnerischen Gehalt an 84 Gew.-%, jeweils in Mischung mit roter, rauchender Salpetersäure als Einlagerungsmedium gegenübergestellt. Tabelle 7 gibt die Anteile der Reaktanden wieder, die beim Durchführen der Versuche verwendet wurden:

**Tabelle 7**

| Konz. der PPS | Flüssiganteile des Reaktionsgemisches | | | Verhältnis Naturgraphit zu Flüssiganteil (Gewichtsteile) |
|---|---|---|---|---|
| Prozent P205 rechnerisch | HNO₃ (Gew.-Teile) | PPS (Gew.-Teile) | Konz. an PPS (%)" | |
| | 100 | 0 | 0 | 100/40 |
| 76 | 38 | 2 | 5 | 100/40 |
| 84 | 38 | 2 | 5 | 100/40 |

| | | | | |
|---|---|---|---|---|
| PPS = thermische Polyphosphorsäure | | | | |

Die Reaktanden wurden wie unter Beispiel 1, Teilversuch 3 beschrieben, umgesetzt und es wurden wie dort beschrieben worden ist, aus den Graphiteinlagerungsverbindungen Expan-date und aus diesen Graphitfolien von 1 mm Dicke und mit einer Rohdichte von 1 g/cm³ hergestellt. Als Naturgraphit wurde Graphit Grade 2901 von der Fa. Superior Graphite, Chicago/USA verwendet. Bei dem ersten Beispiel der Tabelle 7 handelt es sich um ein nicht erfinungdgemäßes Vergleichsbeispiel.

Tabelle 8 gibt die an den Graphitexpandaten und den daraus gewonnenen Folien ermittelten Kennwerte wieder:

**Tabelle 8**

| Zusammensetzung der Flüssigphase (Gew.-Teile) | Naturgraphit/ Säuregemisch (Gew.-T.) | Expandatschüttgewicht (g/l) | Kenndaten d. Graphitfolie | | |
|---|---|---|---|---|---|
| | | | Leckage (mg/(s•m)) | Masseverlust (600°C) (%/h) | Zugfestigkeit (N/mm²) |
| 100 T HN0, | 100/40 | 2,9 | 0,124 | 1,81 | 3,02 |
| 38 T HNO₃/2 T PPS, 76 Gew.-%, rech.,P₂0₃ | 100/40 | 2,7 | 0,109 | 0,69 | 2,9 |
| 38 T HNO₃/2 T PPS, 84 Ges.-%, rech., P₂0₅ | 100/40 | 2,1 | 0,073 | 0,60 | 3,56 |

| | | | | | |
|---|---|---|---|---|---|
| PPS = thermische Polyphosphorsäure T = Gewichtsteile | | | | | |

Bei dem ersten Beispiel der Tabelle 8 handelt es sich um ein nicht erfinungdgemäßes Vergleichsbeispiel.

Aus den Meßwerten der Tabelle 8 geht hervor, daß auch unter Verwendung einer thermischen Polyphosphorsäure mit einem rechnerischen Gehalt von nur 76 Gewichtsprozent Phosphorpentoxid gegenüber der Verwendung von roter, rauchender Salpetersäure ohne Zusatz von thermischer Polyphosphorsäure Produkte mit zum Teil erheblich verbesserten Eigenschaften erhalten werden. Lediglich die Zugfestigkeit liegt im Einklang mit dem vergleichsweise großen Schüttgewicht im Bereich der Vergleichsprobe ohne Zusatz von Polyphosphorsäure. Durch das Verwenden von thermischer Polyphosphorsäure mit einem rechnerischen Gehalt von 84 Gewichtsprozent
Phosphorpentoxid wird eine weitere bedeutende Verbesserung der Eigenschaften erreicht.

Aus der Zusammenschau der Ergebnisse der im Labormaßstab durchgeführten Ausführungsbeispiele 1 bis 5 ergibt sich, daß durch einen Zusatz von thermischer Polyphosphorsäure zu flüssigen, sauren Einlagerungsmitteln Graphiteinlagerungsverbindungen produziert werden können, aus denen expandierte Graphite und durch Weiterverarbeiten dieser Graphitexpandate Graphitformkörper und insbesondere Graphitfolien, Graphitplatten und -laminate mit erheblich verbessertem Leckageverhalten und stark erhöhter Widerstandsfähigkeit gegen oxidativen Angriff geschaffen werden können. Dabei hat es der Fachmann durch Ausnutzen der erfinderischen Lehre in der Hand, in welcher Weise er die Eigenschaftsverbesserung steuert. Er kann auch entweder Graphitprodukte mit verbesserter Zug- oder mit verbesserter Druckfestigkeit herstellen, die aber beide eine verbesserte Dichtheit und eine höhere Widerstandsfähigkeit gegen oxidativen Angriff aufweisen.

### Beispiel 6 (technischer Maßstab):

Das erfinderische Verfahren wurde desweiteren auf einer Technikumsanlage im Rahmen von Großversuchen mit roter, rauchender Salpetersäure und thermischer Polyphosphorsäure mit einem rechnerischen Gehalt an Phosphorpentoxid von 84 Gew.-% weiter erprobt. Der Anteil an Einlagerungsflüssigkeit in der Reaktionsmischung betrug 33 Gewichtsprozent bezogen auf die verwendete Menge Graphits. Je Teilversuch wurden 100 kg Naturgraphit Grade 599 thermally purified, Lieferant Luoyang Guanqi Factory Group Co., Ltd., Luoyang City/China eingesetzt. Die Einlagerungsreaktionen wurden bei Raumtemperatur von ca. 22°C vorgenommen. Das Expandieren der nach einer mittleren Verweilzeit von 15 Minuten ausreagierten Mischung aus der Graphiteinlagerungsverbindung und anhaftender Einlagerungsflüssigkeit erfolgte mittels Durchblasens durch die Flamme eines Erdgasbrenners. Die Teilchen der Einlagerungsverbindung wurden dabei innerhalb von Bruchteilen von Sekunden auf eine Temperatur von ca. 1000°C erhitzt. Das dabei erhaltene Graphitexpandat wurde über einen Bandvorverdichter und mehrere Walzenstühle zu Graphitfolien von einer Dicke von 0,5 mm und einer Rohdichte von 0,7 g/cm³ verdichtet. Zwischen Bandvorverdichter und den ersten beiden Walzenstühlen waren zwei Heizstationen angeordnet, in denen das teilverdichtete Folienband nochmals auf 600°C erhitzt wurde, um Reste eingeschlossener verdampfbarer Substanzen zu entfernen. Die Mengen an zugesetztem Einlagerungsagens, dessen jeweilige Zusammensetzung und die Kenndaten der mit diesen Versuchen produzierten Folien sind Tabelle 9 zu entnehmen. Beim Ermitteln der Meßwerte für die Leckage wurden 4 Prüfdichtungen mit einer Ausgangsdicke von 0,5 mm übereinandergelegt. Außerdem ist die in Tabelle 9 angegebene Leckagerate in Abweichung zu den in den vorhergehenden Ausführungsbeispielen verzeichneten Leckageraten rechnerisch auf ein Flächengewicht des Prüfkörpers von 2000 g/m² bezogen worden.

**Tabelle 9**

| Zusammensetzung der Flüssigphase (Gew.-Teile) | | Naturgraphit/ Säuregemisch (Gew.-Teile) | Expandatschüttgewicht (g/l) | Kenndaten d. Graphitfolie | | |
|---|---|---|---|---|---|---|
| | | | | Leckage bezogen auf Flächengewicht 2000 g/m² (mg/ (s-m)) | Masseverlust | Zugfestig-(N/mm²) |
| HNO₃ (Gewichtsteile) | PPS (Gewichtsteile) | | | | | |
| 33 | 0 | 100/33 | 2,5 | 0,25 - 0,30 | 20,5 | 2,5 |
| 32,7 | 0,3 | 100/33 | 2,0 | 0,18 - 0,22 | 1,1 | 2,8 |
| 31,3 | 1,7 | 100/33 | 1,9 | 0,08 - 0,10 | 0,3 | 2,8 |
| 29,7 | 3,3 | 100/33 | 1,8 | 0,05 - 0,06 | 0,7 | 3,0 |
| 26,4 | 6,6 | 100/33 | 1,8 | 0,04 - 0,05 | 0,7 | 3,0 |

| | | | | | | |
|---|---|---|---|---|---|---|
| PPS = thermischen Polyphosphorsäure | | | | | | |

Bei dem ersten Beispiel der Tabelle 9 handelt es sich um ein nicht erfinungdgemäßes Vergleichsbeispiel.

Aus den Werten der Tabelle 9 folgt, daß das erfinderische Verfahren auch im großen Maßstab mit Erfolg angewendet 10 werden kann. Die Kenndaten, die die erfindungsgemäßen Verbesserungen wiedergeben, liegen hier noch günstiger als bei den im Labormaßstab durchgeführten Ausführungsbeispielen 1 bis 5. Insbesondere geht daraus hervor, daß nach dem Verfahren unter Hinzufügen von mindestens 10 Gewichtsteilen thermischer Polyphosphorsäure bezogen auf das flüssige, saure Einlagerungsagens Graphitdichtungen hergestellt werden können, deren Dichtheit, ausgedrückt durch die Leckagerate für Stickstoff bei ausgezeichneter Oxidationsbeständigkeit höchstens 0,06 mg/(s·m) beträgt und damit über das hinausgeht, was im Stand der Technik bis jetzt möglich war. Diese Graphitfolien und Dichtungen weisen Festigkeitseigenschaften auf, die für ihr Verwenden für hochwertige Dichtungen völlig ausreichend sind.

Zusammengefaßt hat die Erfindung folgende Vorteile:
- Verbesserung der Dichtheit von Graphitprodukten wie Folien, Platten, Laminaten, Dichtungen;
- Verbesserung der Beständigkeit der vorgenannten Graphitprodukte gegen oxidativen Angriff;
- Möglichkeit zum Steuern der Zug- und der Druckfestigkeit der nach dem Verfahren hergestellten Graphitprodukte unter Beibehalten der bezüglich der Dichtheit und der Oxidationsbeständigkeit genannten Vorteile, wobei mindestens einer der genannten Festigkeitswerte größer ist, als bei nach dem Stand der Technik hergestellten Produkten;
- Bei dem Verfahren werden keine Kationen in die Graphitprodukte eingebracht, die als Oxidationsförderer wirken;
- Anwendbarkeit des Verfahrens auf die verschiedenen technisch anwendbaren flüssigen Einlagerungsmittel;
- Verbesserung des Reaktionsablaufes beim Verwenden von konzentrierter Salpetersäure als Einlagerungsmittel;
- Vermeiden der beim Arbeiten mit Phosphorpentoxid einhergehenden Schwierigkeiten und Nachteile.

## Patentansprüche

1. Verfahren zum Herstellen von expandiertem Graphit aus einer expandierbaren Graphiteinlagerungsverbindung aus kristallinen Graphitteilchen, die eine Schichtstruktur aufweiten, wobei
die Graphitteilchen im Temperaturbereich von -10 °C bis +80 °C ohne zusätzliche Zugabe von Wasser mit einer Reaktionsmischung umgesetzt werden,
die mindestens aus einer starken, konzentrierten Säure aus der Gruppe bestehend aus Schwefelsäure mit einer Konzentration ab 90 Gew.-% Salpetersäure mit einer Konzentration ab 60 Gew.-% oder Phosphorsäure mit einer Konzentration ab 80 Gew.-%, einem Oxidationsmittel aus der Gruppe bestehend aus konzentrierter Salpetersäure mit einer Konzentration ab 60 Gew.-%, Wasserstoffperoxid oder Peroxoschwefelsäure zum Oxidieren des Graphits
und einer thermischen Polyphosphorsäure besteht, wobei
diese Reaktionsmischung in einem Verhältnis von 33 bis 200 Gewichtsteilen bezogen auf 100 Gewichtsteile Graphit eingesetzt
und nach dem Beenden der Einlagerungsreaktion so, wie sie ist - ohne Zusatz von Wasser
- durch schnelles Erhitzen auf mindestens 800 °C expandiert wird,
**dadurch gekennzeichnet, dass**
die Graphiteinlagerungsverbindung bis zu einem Schüttgewicht von 3 g/l oder kleiner thermisch expandiert wird.

2. Verfahren nach Patentanspruch 1, **dadurch gekennzeichnet, dass**
die Reaktionsmischung eine thermische Polyphosphorsäure mit einem rechnerischen Phosphorpentoxidgehalt von mindestens 76 Gew.-% oder eine thermische Polyphosphorsäure mit einem rechnerischen Phosphorpentoxidgehalt von mindestens 84 Ges.-% enthält.

3. Verfahren nach Patentanspruch 1 oder 2,
**dadurch gekennzeichnet, dass**
ein Mischungsverhältnis von der Summe aus Säure und Oxidationsmittel gleich 1 einerseits zu thermischer Polyphosphorsäure andererseits angewendet wird, das im Bereich von 1 zu 0,002 bis 1 zu 1,0 Gewichtsteilen liegt.

4. Verfahren nach Patentanspruch 3,
**dadurch gekennzeichnet, dass**
ein Mischungsverhältnis der Summe aus Säure und Oxidationsmittel gleich 1 einerseits zu thermischer Polyphosphorsäure andererseits angewendet wird, das im Bereich von 1 zu 0,005 bis 1 zu 0,1 Gewichtsteilen liegt.

5. Verfahren nach Patentanspruch 4,
**dadurch gekennzeichnet, dass**
ein Mischungsverhältnis der Summe aus Säure und Oxidationsmittel gleich 1 einerseits zu thermischer Polyphosphorsäure andererseits angewendet wird, das im Bereich von 1 zu 0,005 bis 1 zu 0,03 Gewichststeilen liegt.

6. Verfahren nach einem oder mehreren der Patentansprüche 1 bis 5,
**dadurch gekennzeichnet dass**
nach dem Beenden der Einlagerungsreaktion der Überschuss an Flüssigkeit von der Reaktionsmischung getrennt wird.

7. Verfahren nach einem oder mehreren der Patentansprüche 1 bis 6,
**dadurch gekennzeichnet, dass**
die Reaktionsmischung in einem Verhältnis, bezogen auf 100 Gewichtsteile Graphit verwendet wird, das im Bereich von 33 bis 50 Gewichtsteilen liegt.

8. Verfahren nach einem oder mehreren der Patentansprüche 1, 2, 3, 6 oder 7, **dadurch gekennzeichnet, dass**
die Graphitteilchen mit einer Reaktionsmischung umgesetzt werden, die aus hochkonzentrierter Salpetersäure mit einer Konzentration ab 80 Gew.-% und thermischer Polyphosphorsäure besteht.

9. Verfahren nach Patentanspruch 8, **dadurch gekennzeichnet, dass**
als Salpetersäure rote, rauchende Salpetersäure verwendet wird.

10. Verfahren nach einem der Patentansprüche 7 bis 9,
**dadurch gekennzeichnet, dass**
ein Mischungsverhältnis von Salpetersäure zu thermischer Polyphosphorsäure angewendet wird, das im Bereich von 1 zu 0,005 bis 1 zu 0,25 Gewichtsteilen liegt.

11. Verfahren nach Patentanspruch 10,
**dadurch gekennzeichnet, dass**
ein Mischungsverhältnis von Salpetersäure zu thermischer Polyphosphorsäure angewendet wird, das im Bereich von 1 zu 0,005 bis 1 zu 0,1 Gewichtsteilen liegt.

12. Verfahren nach Patentanspruch 11,
**dadurch gekennzeichnet, dass**
ein Mischungsverhältnis von Salpetersäure zu thermischer Polyphosphorsäure angewendet wird, das im Bereich von 1 zu 0,005 bis 1 zu 0,03 Gewichtsteilen liegt.

13. Verwendung des nach einem Verfahren gemäß einem oder mehreren der Patentansprüche 1 bis 12 hergestellen expandierten Graphits zum Herstellen von Produkten aus der Gruppe Graphitfolien, Graphitlaminate, Graphitdichtungen, Graphitpackungen, Graphitpackungsringen, Graphitpackungsgarne.

14. Graphitfolie, **dadurch gekennzeichnet, dass**
sie eine Gasdurchlässigkeit für Stickstoff gemäß DIN 28090 - 1 (Vorversuch), bezogen auf ein Graphitflächengewicht von 2000 g/m² von höchstens 0,06 mg/(m·s) aufweist und durch Verdichten eines expandierten Graphits hergestellt worden ist, der nach einem Verfahren gemäß einem der Ansprüche 1 bis 12 erhalten worden ist

## Claims

1. Method for producing expanded graphite from an expandable interstitial compound of graphite of crystalline graphite particles which have a layer structure,
the graphite particles being reacted, in a temperature range of from -10 °C to +80 °C, without the addition of water, with a reaction mixture that at least consists of a strong, concentrated acid from the group consisting of sulfuric acid at a concentration of 90 wt.% and above, nitric acid at a concentration of 60 wt.% and above, or phosphoric acid at a concentration of 80 wt.% and above, an oxidising agent from the group consisting of concentrated nitric acid at a concentration of 60 wt.% and above, hydrogen peroxide or peroxosulfuric acid for oxidising the graphite, and a thermal polyphosphoric acid,
this reaction mixture being used in a ratio of from 33 to 200 parts by weight, based on 100 parts by weight of graphite,
and after the interstitial reaction has ended, being expanded, as it is, without the addition of water, by rapid heating up to at least 800 °C,
- **characterised in that**
the interstitial compound of graphite is thermally expanded up to a bulk density of 3 g/l or less.

2. Method according to claim 1, **characterised in that**
the reaction mixture contains a thermal polyphosphoric acid having a calculated phosphorus pentoxide content of at least 76 wt.% or a thermal polyphosphoric acid having a calculated phosphorus pentoxide content of at least 84 wt.%.

3. Method according to either claim 1 or claim 2
**characterised in that**
a mixture ratio of the sum of acid and oxidising agent equal to 1 on the one hand to thermal polyphosphoric acid on the other hand is used, which ratio is in the range of from 1:0.002 to 1:1.0 parts by weight.

4. Method according to claim 3
**characterised in that**
a mixture ratio of the sum of acid and oxidising agent equal to 1 on the one hand to thermal polyphosphoric acid on the other hand is used, which ratio is in the range of from 1:0.005 to 1:0.1 parts by weight.

5. Method according to claim 4,
**characterised in that**
a mixture ratio of the sum of acid and oxidising agent equal to 1 on the one hand to thermal polyphosphoric acid on the other hand is used, which ratio is in the range of from 1:0.005 to 1:0.03 parts by weight.

6. Method according to one or more of claims 1 to 5,
**characterised in that**
after the interstitial reaction has ended, the excess liquid is separated from the reaction mixture.

7. Method according to one or more of claims 1 to 6,
**characterised in that**
the reaction mixture is used in a ratio, based on 100 parts by weight graphite, that is in the range of from 33 to 50 parts by weight.

8. Method according to one or more of claims 1, 2, 3, 6 or 7, **characterised in that**
the graphite particles are reacted with a reaction mixture that consists of high-concentration nitric acid at a concentration of 80 wt.% and above and thermal polyphosphoric acid.

9. Method according to claim 8, **characterised in that**
red fuming nitric acid is used as the nitric acid.

10. Method according to any of claims 7 to 9,
**characterised in that**
a mixture ratio of nitric acid to thermal polyphosphoric acid is used which is in the range of from 1:0.005 to 1:0.25 parts by weight.

11. Method according to claim 10,
**characterised in that**
a mixture ratio of nitric acid to thermal polyphosphoric acid is used which is in the range of from 1:0.005 to 1:0.1 parts by weight.

12. Method according to claim 11,
**characterised in that**
a mixture ratio of nitric acid to thermal polyphosphoric acid is used which is in the range of from 1:0.005 to 1:0.03 parts by weight.

13. Use of the expanded graphite, produced in accordance with a method according to one or more of claims 1 to 12, for producing products from the group of graphite films, graphite laminates, graphite seals, graphite packing, graphite packing rings and graphite packing yarns.

14. Graphite film, **characterised in that**
it has a gas-permeability to nitrogen according to DIN 28090-1 (preliminary test) of at most 0.06 mg/(m·s), based on a grammage of the graphite of 2000 g/m², and is produced by compressing an expanded graphite that was obtained in accordance with a method according to any of claims 1 to 12.

## Revendications

1. Procédé destiné à la production de graphite expansé à partir d'un composé expansible d'intercalation du graphite, lequel est constitué de particules de graphite cristallines qui présentent une structure en couches, dans lequel
les particules de graphite sont mises en réaction avec un mélange de réaction dans la plage de température de -10 °C à +80 °C sans adjonction supplémentaire d'eau ;
lequel mélange de réaction est constitué au moins à partir d'un acide fort concentré, issu du groupe constitué par de l'acide sulfurique avec une concentration à partir de 90 % en poids, par de l'acide nitrique avec une concentration à partir de 60 % en poids ou par de l'acide phosphorique avec une concentration à partir de 80 % en poids, ainsi qu'à partir d'un agent oxydant issu du groupe constitué par de l'acide nitrique concentré avec une concentration à partir de 60 % en poids, par du peroxyde d'hydrogène ou par de l'acide peroxosulfurique en vue de l'oxydation du graphite et
lequel mélange de réaction est également constitué d'un acide polyphosphorique thermique, dans lequel ce mélange de réaction est employé dans une proportion de 33 à 200 parties en poids, mesurée par rapport à 100 parties en poids de graphite
et est expansé tel quel - c'est-à-dire sans adjonction d'eau - à l'issue de la réaction d'intercalation par un chauffage rapide à au moins 800 °C,
- **caractérisé en ce que**
le composé d'intercalation du graphite est expansé thermiquement jusqu'à atteindre une densité apparente de 3 g/l ou moins.

2. Procédé selon la revendication 1, **caractérisé en ce que**
le mélange de réaction contient un acide polyphosphorique thermique avec une teneur en pentoxyde de phosphore obtenue par calcul d'au moins 76 % en poids ou contient un acide polyphosphorique thermique avec une teneur en pentoxyde de phosphore obtenue par calcul d'au moins 84 % en poids.

3. Procédé selon la revendication 1 ou 2,
**caractérisé en ce que**
une proportion de mélange est appliquée de la somme de l'acide et de l'agent oxydant équivalant à 1, d'une part, par rapport à un acide polyphosphorique thermique, d'autre part,
laquelle proportion de mélange se situe dans la plage de 1 pour 0,002, partie en poids à 1 pour 1,0 partie en poids.

4. Procédé selon la revendication 3,
**caractérisé en ce que**
une proportion de mélange est appliquée de la somme de l'acide et de l'agent oxydant équivalant à 1, d'une part, par rapport à un acide polyphosphorique thermique, d'autre part, laquelle proportion de mélange se situe dans la plage de 1 pour 0,005 partie en poids à 1 pour 0,1 partie en poids.

5. Procédé selon la revendication 4,
**caractérisé en ce que**
une proportion de mélange est appliquée de la somme de l'acide et de l'agent oxydant équivalant à 1, d'une part, par rapport à un acide polyphosphorique thermique, d'autre part, laquelle proportion de mélange se situe dans la plage de 1 pour 0,005 partie en poids à 1 pour 0,03 partie en poids.

6. Procédé selon l'une ou plusieurs des revendications 1 à 5,
**caractérisé en ce que**
le surplus de liquide est séparé du mélange de réaction à l'issue de la réaction d'intercalation.

7. Procédé selon l'une ou plusieurs des revendications 1 à 6,
**caractérise en ce que**
le mélange de réaction est utilisé dans une proportion mesurée par rapport à 100 parties en poids de graphite et qui se situe dans la plage de 33 à 50 parties en poids.

8. Procédé selon l'une ou plusieurs des revendications 1, 2, 3, 6 ou 7,
**caractérisé en ce que**
les particules de graphite sont mises en réaction avec un mélange de réaction qui est constitué d'acide nitrique fortement concentré avec une concentration à partir de 80 % en poids, ainsi que d'acide polyphosphorique thermique.

9. Procédé selon la revendication 8, **caractérisé en ce que**
de l'acide nitrique rouge fumant est utilisé comme acide nitrique.

10. Procédé selon l'une des revendications 7 à 9,
**caractérisé en ce que**
une proportion de mélange d'acide nitrique par rapport à un acide polyphosphorique thermique est appliquée, laquelle proportion de mélange se situe dans la plage de 1 pour 0,005 partie en poids à 1 pour 0,25 partie en poids.

11. Procédé selon la revendication 10,
**caractérisé en ce que**
une proportion de mélange d'acide nitrique par rapport à un acide polyphosphorique thermique est appliquée, laquelle proportion de mélange se situe dans une plage de 1 pour 0,005 partie en poids à 1 pour 0,1 partie en poids.

12. Procédé selon la revendication de brevet 11,
**caractérise en ce que**
une proportion de mélange d'acide nitrique par rapport à un acide polyphosphorique thermique est appliquée, laquelle proportion de mélange se situe dans une plage de 1 pour 0,005 partie en poids à 1 pour 0,03 partie en poids.

13. Utilisation du graphite expansé produit conformément à un procédé selon l'une ou plusieurs des revendications 1 à 12 en vue de la fabrication de produits issus du groupe constitué par des feuilles de graphite, des laminés de graphite, des joints de graphite, des garnitures en graphite, des bagues de garniture en graphite et/ou des garnitures d'étanchéité en graphite.

14. Feuille de graphite, **caractérisée en ce que**
ladite feuille de graphite présente, conformément à la norme DIN 28090-1 (test préliminaire), une perméabilité aux gaz pour l'azote de 0,06 mg/(m·s) au plus, mesurée par rapport à un poids surfacique du graphite de 2000 g/m², et ladite feuille de graphite a été produite par la compression d'un graphite expansé, lequel a été obtenu conformément à un procédé selon l'une des revendications 1 à 12.
